# EUROPÄISCHE PATENTANMELDUNG

(11) **EP 2 493 081 A2**
(43) Veröffentlichungstag der Anmeldung: **29.08.2012**
(21) Anmeldenummer: 12155768.0
(22) Anmeldetag: 16.02.2012
(51) Int. Cl.: H04B 1/38

(54) **Anordnung zum Senden und Empfangen von Funksignalen für den stationären Betrieb eines Funk-Endgeräts und Verfahren zum Herstellen einer derartigen Anordnung**

(30) Priorität: 28.02.2011 DE 102011013194
(71) Anmelder: Funkwerk Dabendorf GmbH, 15806 Dabendorf (DE)
(72) Erfinder: Nast, Helmut, 12557 Berlin (DE); Bartsch, Thomas, 15806 Zossen OT Dabendorf (DE)
(74) Vertreter: Patentanwälte Bressel und Partner

(57) **Zusammenfassung**

Die Erfindung betrifft eine Anordnung zum Senden und Empfangen von Funksignalen, insbesondere Funksignalen in einem zellulären Funknetz wie UMTS, LTE und/oder GSM, wobei die Anordnung aufweist:
• ein Antennenkabel (11) mit einem Endgeräte-Anschluss (22, 24), über den ein Funk-Endgerät (1) an das Antennenkabel (11) anschließbar ist, um Funksignale von dem Funk-Endgerät (1) zu einer entfernten Station per Funk zu übertragen und von der entfernten Station per Funk zu empfangen,
• eine Antennenanordnung (3) mit zumindest einer Antenne (3a, 3b), wobei die Antennenanordnung (3) eine zusätzliche Antennenanordnung (3) ist, an die das Antennenkabel (11) anschließbar ist, um die Funksignale über das Antennenkabel (11) und eine von der Antennenanordnung (3) ausgehende bzw. an ihr endende Funkstrecke zu senden bzw. zu empfangen,
• einen Funksignal-Sendeverstärker (7a), der in einem Funksignal-Sendepfad zwischen dem Endgeräte-Anschluss (22, 24) und der Antennenanordnung (3) angeordnet ist,
• einen Funksignal-Empfangsverstärker (7b), der in einem Funksignal-Empfangspfad zwischen der Antennenanordnung (3) und dem Endgeräte-Anschluss (22, 24) angeordnet ist,
• eine Fernspeisung (5), die an die Antennenanordnung (3) angeschlossen ist und ausgestaltet ist, einen Gleichstrom zur Versorgung des Funksignal-Sendeverstärkers (7a) und/oder des Funksignal-Empfangsverstärkers (7b) in das Antennenkabel (11) einzuspeisen,
wobei
a) der Funksignal-Sendeverstärker (7a) und/oder der Funksignal-Empfangsverstärker (7b) in das Antennenkabel (11) integriert ist/sind und dabei im Verlauf des Antennenkabels (11) näher an der Antennenanordnung (3) angeordnet ist/sind als die Fernspeisung (5) oder
b) der Funksignal-Sendeverstärker und/oder der Funksignal-Empfangsverstärker in die Antennenanordnung integriert ist/sind.

## Beschreibung

Die Erfindung betrifft eine Anordnung zum Senden und Empfangen von Funksignalen und ein Verfahren zum Herstellen einer derartigen Anordnung. Die Anordnung dient dem stationären Betrieb eines Funk-Endgeräts. Bei den Funksignalen handelt es sich insbesondere um Funksignale in einem zellulären Funknetz wie UMTS, LTE und/oder GSM. Die Erfindung betrifft insbesondere das Gebiet der Herstellung und Aufrechterhaltung einer Funkverbindung zwischen einem Funk-Endgerät und dem zellulären Funknetz.

Funk-Endgeräte wie z.B. Mobiltelefone, Notrufsender, endgeräteseitige Router oder Funksender (z. B. so genannte USB-Sticks, die über eine USB-Schnittstelle mit dem Computer verbunden sind, um diesen mit einem zellulären Netz zu verbinden) zur Verbindung von Computern mit einem Funknetz, sind üblicherweise dazu in der Lage, über eine eingebaute Sende- und Empfangsantenne direkt mit dem Funknetz zu kommunizieren. Es gibt jedoch Situationen, in denen die Verbindungsqualität sehr schlecht ist oder sogar eine Verbindung nicht möglich ist. Zum Beispiel treten solche Situationen häufig innerhalb von Gebäuden auf. Ein Grund hierfür liegt darin, dass Gebäudeteile und/oder Nachbargebäude die Übertragung der Funksignale behindern.

Moderne Funk-Endgeräte sind dazu in der Lage, Funkverbindungen in verschiedenen Frequenzbereichen und in verschiedene Funknetze aufzubauen und aufrechtzuerhalten. Zum Beispiel in Deutschland werden Funknetze gemäß dem GSM (Global System for Mobile Communication) in Frequenzbereichen um 900 MHz und außerdem um 1800 MHz betrieben. Ferner werden Funknetze gemäß UMTS (Universal Mobile Telecommunication System) bei Frequenzen um 2100 MHz betrieben. Das für noch höhere Daten-Übertragungsraten geeignete LTE (Long Term Evolution) wird zum Beispiel in Deutschland künftig bei Frequenzen um 800 MHz und um 2500 MHz in zellulären Funknetzen angeboten.

Es ist eine Aufgabe der vorliegenden Erfindung, eine Anordnung zum Senden und Empfangen von Funksignalen sowie ein Verfahren zum Herstellen einer derartigen Anordnung anzugeben, die es einem Nutzer von Funk-Endgeräten ermöglichen, das Endgerät an einem Ort zu benutzen, von dem aus die Kommunikation mit einer entfernten Basisstation nicht oder nur bei schlechter Übertragungsqualität der Funksignale möglich ist. Der Ort, an dem der Benutzer das Funk-Endgerät benutzt, soll insbesondere innerhalb eines Gebäudes liegen können.

Gemäß einem Grundgedanken der vorliegenden Erfindung wird die Qualität der Funkverbindung verbessert oder eine Funkübertragung überhaupt ermöglicht, indem eine zusätzliche Antennenanordnung mit zumindest einer Antenne verwendet wird. Hat eine solche zusätzliche Antenne zum Beispiel einen höheren Antennengewinn als die in das Funk-Endgerät integrierte Antenne, kann die Kommunikation zwischen Endgerät und Funknetz verbessert werden. Außerdem ist es möglich und wird es bevorzugt, die zusätzliche Antenne an einem geeigneten Ort in einer Entfernung zum Funk-Endgerät (z. B. außerhalb eines Gebäudes) anzuordnen, von dem aus eine bessere Funkverbindung zum Funknetz möglich ist als von vielen anderen Orten aus, z. B. von Orten weit im Innern des Gebäudes.

Abhängig von dem Funknetz-Standard (z. B. LTE) ist ggf. erforderlich, die Sende- und Empfangssignale über getrennte Leitungen zwischen der zusätzlichen Antennenanordnung und dem Endgerät zu übertragen, z. B. getrennt nach Sende- und Empfangspfad. Auch können für die verschiedenen Mobilfunknetz-Standards und -Frequenzbereiche verschiedene Antennen vorgesehen sein, die zu einer gemeinsamen Antennenanordnung zusammengefasst sind, welche wahlweise nach Bedarf genutzt werden können. Insbesondere können mehrere Antennen über eine Funksignalweiche mit einem gemeinsamen Anschluss verbunden sein, an den das Antennenkabel angeschlossen wird/ist. Bei der Funksignalweiche kann es sich zum Beispiel um einen Splitter/Combiner handeln. Im Fall der Aufteilung der Funksignale, die von dem Funk-Endgerät zu den Antennen übertragen werden, spricht man bei einer solchen Einrichtung von einem Splitter. Im Fall der Übertragung von Funksignalen, die die einzelnen Antennen empfangen haben, zu dem Funk-Endgerät spricht man bei einer solchen Einrichtung von einem Combiner. Ein Splitter/Combiner hat den Vorteil, dass gleichzeitig eine Kommunikation in verschiedenen Frequenzbereichen stattfinden kann und dass der Aufwand zum Betreiben der Einrichtung gering ist, da keine Schaltvorgänge erforderlich sind. Nachteilig an der Splitterfunktion ist jedoch, dass die Funksignalstärke in den einzelnen Funksignalpfaden von dem Splitter zu den Antennen geringer ist als an dem gemeinsamen Funksignalanschluss.

In allen Fällen können über die Verbindung zwischen dem Endgerät und der zusätzlichen Antennenanordnung sowie zwischen der zusätzlichen Antennenanordnung und den entfernten Funkstationen dieselben Protokolle zum Übertragen von Signalen. Die Anordnung benötigt daher keine den Protokollen entsprechende Encoder/Decoder.

Die Anordnung weist ferner ein Antennenkabel mit einem Endgeräte-Anschluss für den Anschluss des Funk-Endgerätes auf, an den das Funk-Endgerät anschließbar ist. Die Funksignalverbindung zwischen der zusätzlichen Antennenanordnung und dem Endgerät wird über das Antennenkabel und optional zusätzlich über eine Funkverbindung realisiert. Zum Beispiel kann das Endgerät über eine drahtlose Ankopplung seiner Sende- und Empfangsantenne an eine Kopplungsantenne angekoppelt werden (bzw. angekoppelt sein) und die Kopplungsantenne über ein Antennenkabel an die zusätzliche Antenne angekoppelt werden bzw. sein.

Insbesondere wird vorgeschlagen: Eine Anordnung zum Senden und Empfangen von Funksignalen, insbesondere Funksignalen in einem zellulären Funknetz wie UMTS, LTE und/oder GSM, wobei die Anordnung aufweist:
- ein Antennenkabel mit einem Endgeräte-Anschluss, über den ein Funk-Endgerät an das Antennenkabel anschließbar ist, um Funksignale von dem Funk-Endgerät zu einer entfernten Station per Funk zu übertragen und von der entfernten Station per Funk zu empfangen,
- eine Antennenanordnung mit zumindest einer Antenne, wobei die Antennenanordnung eine zusätzliche Antennenanordnung ist, an die das Antennenkabel anschließbar ist, um die Funksignale über das Antennenkabel und eine von der Antennenanordnung ausgehende bzw. an ihr endende Funkstrecke zu senden bzw. zu empfangen,
- einen Funksignal-Sendeverstärker, der in einem Funksignal-Sendepfad zwischen dem Endgeräte-Anschluss und der Antennenanordnung angeordnet ist,
- einen Funksignal-Empfangsverstärker, der in einem Funksignal-Empfangspfad zwischen der Antennenanordnung und dem Endgeräte-Anschluss angeordnet ist,
- eine Fernspeisung, die an die Antennenanordnung angeschlossen ist und ausgestaltet ist, einen Gleichstrom zur Versorgung des Funksignal-Sendeverstärkers und/oder des Funksignal-Empfangsverstärkers in das Antennenkabel einzuspeisen,
   wobei
   a) der Funksignal-Sendeverstärker und/oder der Funksignal-Empfangsverstärker in das Antennenkabel integriert ist/sind und dabei im Verlauf des Antennenkabels näher an der Antennenanordnung angeordnet ist/sind als die Fernspeisung oder
   b) der Funksignal-Sendeverstärker und/oder der Funksignal-Empfangsverstärker in die Antennenanordnung integriert ist/sind.

Ferner wird ein Verfahren zum Herstellen einer Anordnung zum Senden und Empfangen von Funksignalen, insbesondere Funksignalen in einem zellulären Funknetz wie UMTS, LTE und/oder GSM, vorgeschlagen, wobei das Verfahren die Schritte aufweist:
- Bereitstellen eines Antennenkabel mit einem Endgeräte-Anschluss, über den ein Funk-Endgerät an das Antennenkabel anschließbar ist, um Funksignale von dem Funk-Endgerät zu einer entfernten Station per Funk zu übertragen und von der entfernten Station per Funk zu empfangen,
- Verbinden einer Antennenanordnung, die zumindest eine Antenne aufweist, mit einem dem Endgeräte-Anschluss entgegengesetzten Ende des Antennenkabels, wobei die Antennenanordnung ausgestaltet ist, die Funksignale zu senden bzw. zu empfangen,
- Anordnen eines Funksignal-Sendeverstärkers in einem Funksignal-Sendepfad zwischen dem Endgeräte-Anschluss und der Antennenanordnung,
- Anordnen eines Funksignal-Empfangsverstärkers in einem Funksignal-Empfangspfad zwischen der Antennenanordnung und dem Endgeräte-Anschluss,
- Anschließen einer Fernspeisung an die Antennenanordnung, wobei die Fernspeisung ausgestaltet ist, einen Gleichstrom zur Versorgung des Funksignal-Sendeverstärkers und/oder des Funksignal-Empfangsverstärkers in das Antennenkabel einzuspeisen, wobei
   a) der Funksignal-Sendeverstärker und/oder der Funksignal-Empfangsverstärker in das Antennenkabel integriert wird/werden und dabei im Verlauf des Antennenkabels näher an der Antennenanordnung angeordnet wird/werden als die Fernspeisung oder
   b) der Funksignal-Sendeverstärker und/oder der Funksignal-Empfangsverstärker in die Antennenanordnung integriert wird/werden.

Dies schließt nicht aus, dass z. B. der Funksignal-Sendeverstärker in die Antennenanordnung integriert wird und Funksignal-Empfangsverstärker in das Antennenkabel integriert wird. Die Formulierung "oder" ist lediglich so zu verstehen, dass nur eines der beiden Merkmale vorhanden sein muss, das andere Merkmal aber auch vorhanden sein kann, jedenfalls wenn die beiden Verstärker voneinander beabstandet sind. Entsprechendes gilt für die oben definierte Anordnung.

Bei dem Endgeräte-Anschluss kann es sich z.B. um einen Steckverbinder handeln. Da moderne Mobiltelefone aber in der Regel keine entsprechende Buchse zum Einstecken des Steckverbinders haben, wird die zuvor genannte zusätzliche Einrichtung mit einer Kopplungsantenne bevorzugt. Diese zusätzliche Einrichtung kann für das Anschließen der Steckverbindung eingerichtet sein oder fest mit dem Antennenkabel verbunden sein.

Das dem Endgeräte-Anschluss entgegengesetzte Ende des Antennenkabels kann unmittelbar mit der Antennenanordnung verbunden sein bzw. verbunden werden, insbesondere wenn der Funksignal-Empfangsverstärker in die Antennenanordnung integriert ist. Es kann aber auch der Funksignal-Sendeverstärker und/oder der Funksignal-Empfangsverstärker in das Antennenkabel integriert sein, wobei insbesondere ein weiterer Abschnitt des Antennenkabels von dem Funksignal-Sendeverstärker und/oder dem Funksignal-Empfangsverstärker zu der Antennenanordnung führt. In diesem Fall ist also ein dem Endgeräte-Anschluss entgegengesetztes Ende eines ersten Abschnitts des Antennenkabels mit dem Verstärker oder den Verstärkern verbunden und ist der Verstärker oder sind die Verstärker über einen zweiten Abschnitt des Antennenkabels mit der Antennenanordnung verbunden. Diese genannten Verbindungen des Kabels oder der Kabelabschnitte können in gleicher Weise oder auf verschiedene Art ausgeführt werden. Insbesondere kann für eine der Verbindungen eine Steckverbindung vorgesehen sein, z.B. ein Koaxialstecker und eine Koaxialbuchse, wobei in üblicher Weise eine Überwurfmutter zum Festschrauben der Steckverbindung vorgesehen sein kann. Alternativ kann die Verbindung dauerhaft und nicht per Hand lösbar ausgestaltet sein, z.B. durch Verlöten von Adern und/oder Abschirmung des Antennenkabels mit entsprechenden Anschlüssen des oder der Verstärker oder der Antennenanordnung. Wenn die genannten zwei Abschnitte des Antennenkabels vorhanden sind, wird es bevorzugt, dass entweder an dem in das Antennenkabel integrierten Verstärker und/oder an der Fernspeisung oder dem Endgeräte-Anschluss eine Steckverbindung des Antennenkabels vorgesehen ist, so dass das Antennenkabel mitsamt dem zugeordneten Teil des Steckverbinders durch eine Durchgangsbohrung (z.B. in einer Gebäudewand) hindurchgeführt werden kann. Dies erleichtert die Montage der Anordnung. Dabei wird es weiter bevorzugt, dass der an dem einen Ende des Antennenkabels bereits befestigte Teil des Steckverbinders noch nicht vollständig ist. Dadurch kann ein Element des Steckverbinders, der breiter als das Antennenkabel ist, nach dem Verlegen des Antennenkabels an dem Steckverbinder montiert werden. Dadurch ist die Montage weiter erleichtert. Ein geeigneter Stecker ist z.B. ein sogenannter FAKRA (Fachkreis Automobil)-Stecker, z. B. der Stecker Typ ROKA 5107520, der von Robert Karst GmbH & Co. KG, Gneisenaustr. 27, D-10961 Berlin vertrieben wird. Insbesondere kann das Gehäuse des Teils des Steckverbinders nachträglich ergänzt werden, wenn das Kabel bereits verlegt ist. Vorzugsweise wird beim Verlegen des Kabels ein Hilfselement an dem freien Steckerteil-Ende befestigt, wodurch ein Hindurchführen des Steckerteils durch Bohrungen erleichtert wird.

Auch die Fernspeisung kann in das Antennenkabel integriert sein. Wenn der erste und zweite Abschnitt des Antennenkabels vorhanden sind, d.h. wenn auch zumindest einer der beiden Verstärker in das Antennenkabel integriert ist, ist bzw. wird die Fernspeisung vorzugsweise in den ersten Abschnitt des Antennenkabels integriert. Allerdings wird es dabei bevorzugt, dass die Fernspeisung nur in eine von zwei Leitungen des Antennenkabels integriert wird. Im bevorzugten Fall handelt es sich bei dem Antennenkabel um ein Twin-Koaxialkabel, d.h. um ein Kabel, bei dem Koaxialkabel mechanisch miteinander verbunden sind und parallel zueinander verlaufen. Diese bevorzugte Ausführungsform des Kabels gilt nicht nur für den Fall der Integration der Fernspeisung sondern auch für alle anderen Fälle. Ein solches Twin-Koaxialkabel hat den Vorteil geringer Breite und Dicke und einer hohen mechanischen Flexibilität, d.h. Biegsamkeit. Die Dämpfungsverluste, die mit einer solchen Ausführung des Antennenkabels verbunden sind, werden durch die Verstärker kompensiert oder überkompensiert. Es ist daher nicht erforderlich, dickere und weniger flexible sogenannte Low-Loss-Kabel (d.h. nahezu verlustfreie Kabel) zu verwenden. Insbesondere wenn eine Kopplungsantenne vorhanden ist, würde selbst bei Verwendung eines verlustfreien Kabels aufgrund der drahtlosen Ankopplung der Funkgerätantenne an das Antennenkabel eine Signaldämpfung eintreten. Es ist daher von Vorteil mit einem einzigen Sendeverstärker und/oder mit einem einzigen Empfangsverstärker die jeweiligen Dämpfungsverluste im Empfangspfad bzw. Sendepfad zumindest teilweise zu kompensieren, vorzugsweise vollständig zu kompensieren und im Empfangspfad besonders bevorzugt mehr als zu kompensieren, d.h. insgesamt eine Verstärkung zu bewirken.

Für die zur Integration der Fernspeisung erforderlichen Anschlüsse zu dem Antennenkabel gilt das Gleiche wie zu den oben erwähnten anderen Anschlüssen des Antennenkabels. Insbesondere können daher alternativ Steckverbinder oder andere Verbindungsmöglichkeiten realisiert werden.

Besonders bevorzugt wird es, dass der Funksignal-Sendeverstärker und der Funksignal-Empfangsverstärker Teile einer gemeinsamen Baugruppe der Anordnung sind, wobei die gemeinsame Baugruppe in das Antennenkabel integriert ist/wird und im Verlauf des Antennenkabels näher an der Antennenanordnung angeordnet ist/wird als die Fernspeisung. Dies erlaubt es insbesondere beliebige Antennenanordnungen an das Antennenkabel anzuschließen. Es ist nicht erforderlich, in die Antennenanordnung ein oder beide Verstärker zu integrieren. Vielmehr liegt dem das Konzept zugrunde, dass der Funksignal-Sendeverstärker und der Funksignal-Empfangsverstärker auf die Dämpfungseigenschaften des Antennenkabels und der optional gegebenenfalls zusätzlichen vorhandenen Kopplungsantenne mit der entsprechenden Kopplungseinrichtung angepasst sind. Dieses Konzept gilt allerdings nicht nur bei Integration der beiden Verstärker in eine gemeinsame Baugruppe und der Integration der Baugruppe in das Antennenkabel. Vielmehr wird generell bevorzugt, dass eine Sendesignal-Verstärkung des Funksignal-Sendeverstärkers derart auf die Sendesignaldämpfung des Antennenkabels und optional auch auf die Sendesignaldämpfung einer gegebenenfalls zusätzlich vorhandenen Kopplungsantenne zur drahtlosen Ankopplung des Funk-Endgeräts abgestimmt ist, dass der Sendeverstärker die Sendesignaldämpfung vollständig kompensiert. Im Fall des Funksignal-Empfangsverstärkers wird es sogar bevorzugt, dass diese Signaldämpfung, die optional auch die Empfangssignaldämpfung der Kopplungsantenne beinhaltet, überkompensiert wird. Unter der Signaldämpfung der Kopplungsantenne wird die gesamte Dämpfung verstanden, die durch die drahtlose Kopplung zwischen der Kopplungsantenne und der jeweiligen Antenne des Funk-Endgeräts entsteht.

Die Anordnung des Sendesignalverstärkers bzw. Empfangssignalverstärkers in einem Funksignalpfad zwischen der Antennenanordnung hat den Vorteil, dass der Verstärker oder die Verstärker speziell für die Verstärkung von Funksignalen in dem Frequenzbereich ausgelegt werden können, in dem die Antenne Signale sendet und/oder empfängt. Ein solcher "Single-Band"-Verstärker kann kostengünstiger und/oder bei gleichem Aufwand leistungsstärker sein, als ein Verstärker für mehrere Frequenzbereiche oder besonders große Frequenzbereiche. Es ist aber auch möglich Breitbandverstärker einzusetzen.

Ausführungsbeispiele der Erfindung werden nun unter Bezugnahme auf die beigefügte Bezeichnung beschrieben. Die einzelnen Figuren der Zeichnung zeigen:
- Fig. 1: eine schematische Darstellung einer Anordnung mit einem Funk-Endgerät, einem Antennenkabel, einer Fernspeisung, einer Verstärker-Baugruppe und einer Antennenanordnung, und
- Fig. 2: ein vereinfachtes Schaltbild der in Fig. 1 gezeigten Anordnung.

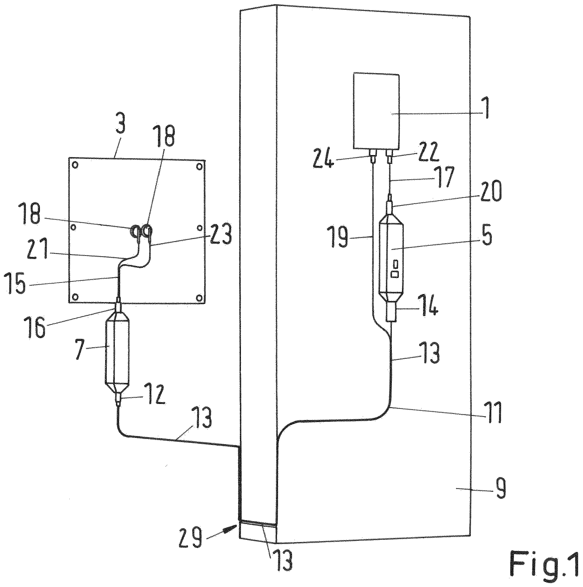

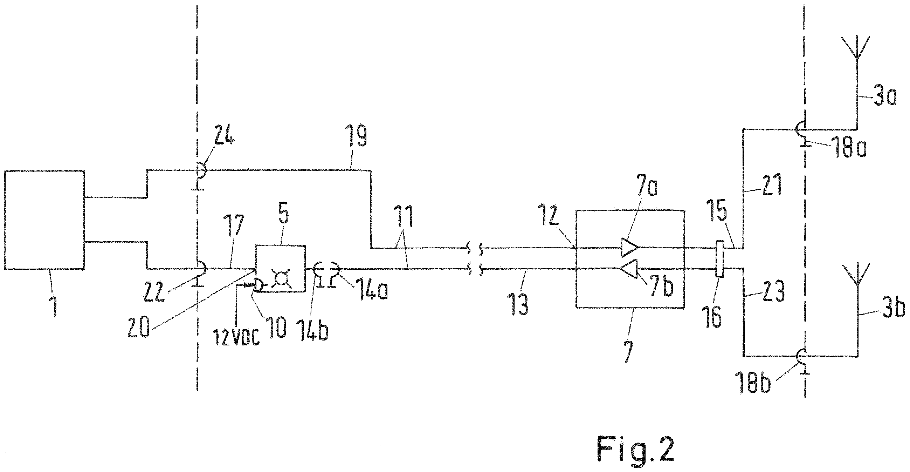

Gleiche Bezugszeichen in Fig. 1 und Fig. 2 bezeichnen gleiche Teile. Das in Fig. 1 auf der Innenseite einer Gebäudewand 9 befestige Funk-Endgerät 1, z.B. ein Router, ist über Steckverbinder 22, 24 mit einem Twin-Koaxialkabel 11 verbunden. Allerdings verlaufen die beiden Leitungen des Twin-Koaxialkabels 11 im Bereich der Anschlüsse zu dem Funk-Endgerät 1 voneinander beabstandet. Die eine Leitung 17 führt von der Verbindung 22 zu dem Funk-Endgerät 1 zu einer Verbindung 20 an einer Fernspeisung 5. Die Fernspeisung 5 ist ausgestaltet, einen Gleichstrom in einen Leitungsabschnitt der Leitung 17 einzuspeisen, der am entgegengesetzten Ende der Verbindung 20 bei einer Verbindung 14 beginnt und zu einer Verstärkerbaugruppe 7 führt. Die Fernspeisung ist also über die Verbindung 14 mit diesem Leitungsabschnitt verbunden. Dabei passieren die Funksignale, die über die Leitung 17 übertragen werden, die Fernspeisung 5 ungehindert. Bei der Fernspeisung 5 handelt es sich insbesondere um einen sogenannten Bias-T, der über ein in Fig. 1 nicht dargestelltes Netzteil eine Versorgungsspannung erhält, z.B. 12 V Gleichspannung, wie in Fig. 2 angedeutet. Diese Gleichspannung wird über einen Anschluss 10 in die Fernspeisung 5 eingespeist.

Bei der Leitung 17 kann es sich z.B. um die Leitung zum Übertragen der Sendesignale handeln, die von dem Funk-Endgerät 1 zu einer zusätzlichen Antenne 3a einer Antennenanordnung 3 übertragen werden. Die Antennenanordnung 3 weist (s. Fig. 2) eine zweite Antenne 3b auf, die dem Empfang von Funksignalen dient. Es ist aber auch möglich, dass die Leitung 17 im Empfangspfad des Antennenkabels 11 integriert ist, wie es Fig. 2 zeigt.

Die andere Leitung des Antennenkabels 11 ist mit dem Bezugszeichen 19 bezeichnet. Diese Leitung 19 führt ununterbrochen von der Verbindung 24 des Funk-Endgeräts 1 zu der Verstärkerbaugruppe 7. Da die Fernspeisung 5 in das Antennenkabel 11 integriert ist, kann der gesamte Abschnitt des Antennenkabels 11, inklusive Fernspeisung 5, von den Verbindungen 22, 24 des Funk-Endgeräts 1 zu der Verstärkerbaugruppe 7 als erster Abschnitt 13 des Antennenkabels 11 bezeichnet werden. In dem überwiegenden Teil der Längserstreckung des ersten Abschnitts des Kabels 11 verlaufen die erste Leitung 17 und die zweite Leitung 19 parallel zueinander und sind mechanisch miteinander verbunden. In diesem Längsabschnitt tritt das Kabel 11 durch eine Durchgangsbohrung 29 in der Gebäudewand 9 hindurch und erstreckt sich im weiteren Verlauf außerhalb des Gebäudes bis zu dem Verbinder 12, an dem das Kabel 11 mit der Verstärkerbaugruppe 7 verbunden ist. An dem entgegengesetzten Ende der Verstärkerbaugruppe 7 ist diese über eine weitere Verbindung 16 mit einem zweiten Abschnitt 15 des Kabels 11 verbunden. Zunächst erstreckt sich das Kabel 11 in dem zweiten Abschnitt 15 als Twin-Koaxialkabel mit parallelen Leitungen, die miteinander verbunden sind und sind die beiden Leitungen in ihren Endabschnitten 21, 23 im weiteren Verlauf getrennt. Der Endabschnitt 21 ist mit einer ersten antennenseitigen Verbindung 18a verbunden, über die die erste Antenne 3a an das Kabel 11 angeschlossen ist. Der zweite Endabschnitt 23 der Leitung 17 ist über eine zweite antennenseitige Verbindung 18b mit der zweiten Antenne 3b der Antennenanordnung 3 verbunden.

In der Verstärkerbaugruppe 7 befindet sich ein Sendeverstärker 7a zur Verstärkung der Sendesignale des Funk-Endgeräts 1, insbesondere zur exakten Kompensation der Sendesignaldämpfung, die durch die Sendesignalübertragung von dem Funk-Endgerät 1 zu der Antenne 3a bewirkt wird. Die Sendesignale liegen somit an der Antenne 3a mit derselben Signalstärke an, mit der sie von dem Funk-Endgerät ausgegeben werden.

In der Verstärkerbaugruppe 7 befindet sich auch ein Empfangsverstärker 7b zur Verstärkung der von der zweiten Antenne 3b empfangenen Signale. Vorzugsweise werden diese Empfangssignale von dem Verstärker 7b so verstärkt, dass die Gesamtverstärkung unter Berücksichtigung der Signaldämpfung auf dem Übertragungsweg von der Antenne 3b zu dem Funk-Endgerät 1 im Bereich von 1 - 3 dB liegt, insbesondere bei 2 dB.

Modifikationen der in Fig. 1 und Fig. 2 dargestellten Anordnung ergeben sich aus der Beschreibung vor der Figurenbeschreibung. Insbesondere kann statt einem Router eine Kopplungseinrichtung zur drahtlosen Ankopplung eines Mobiltelefons oder USB-Sticks an das Antennenkabel als Endgerät vorgesehen sein. Alternativ oder zusätzlich kann auch die zweite Leitung 19 des Kabels 11 über die Fernspeisung zu den endgeräteseitigen Anschlüssen 22, 24 führen. Ferner alternativ oder zusätzlich kann einer der Verstärker in die Antennenanordnung 3 integriert sein und insbesondere kann der Sendeverstärker am Beginn des Kabels 11 bei den Anschlüssen 22, 24 angeordnet sein oder in die Baugruppe der Fernspeisung integriert sein. Allerdings sollte der Empfangsverstärker entweder in die Antennenanordnung integriert sein oder im Verlauf des Antennenkabels nahe bei der Antennenanordnung angeordnet sein, damit das Signal-/Rauschverhältnis der Empfangssignale nicht weiter durch Signaldämpfung verschlechtert wird, bevor die Empfangssignale von dem Empfangssignalverstärker verstärkt werden. Die Beschreibung vor der Figurenbeschreibung enthält weitere Merkmale, die in beliebiger Weise mit der in Fig. 1 und Fig. 2 dargestellten Anordnung kombiniert werden können bzw. Merkmale dieser in Fig. 1 und Fig. 2 dargestellten Anordnung ersetzen können.

## Patentansprüche

1. Anordnung zum Senden und Empfangen von Funksignalen, insbesondere Funksignalen in einem zellulären Funknetz wie UMTS, LTE und/oder GSM, wobei die Anordnung aufweist:
• ein Antennenkabel (11) mit einem Endgeräte-Anschluss (22, 24), über den ein Funk-Endgerät (1) an das Antennenkabel (11) anschließbar ist, um Funksignale von dem Funk-Endgerät (1) zu einer entfernten Station per Funk zu übertragen und von der entfernten Station per Funk zu empfangen,
• eine Antennenanordnung (3) mit zumindest einer Antenne (3a, 3b), wobei die Antennenanordnung (3) eine zusätzliche Antennenanordnung (3) ist, an die das Antennenkabel (11) anschließbar ist, um die Funksignale über das Antennenkabel (11) und eine von der Antennenanordnung (3) ausgehende bzw. an ihr endende Funkstrecke zu senden bzw. zu empfangen,
• einen Funksignal-Sendeverstärker (7a), der in einem Funksignal-Sendepfad zwischen dem Endgeräte-Anschluss (22, 24) und der Antennenanordnung (3) angeordnet ist,
• einen Funksignal-Empfangsverstärker (7b), der in einem Funksignal-Empfangspfad zwischen der Antennenanordnung (3) und dem Endgeräte-Anschluss (22, 24) angeordnet ist,
• eine Fernspeisung (5), die an die Antennenanordnung (3) angeschlossen ist und ausgestaltet ist, einen Gleichstrom zur Versorgung des Funksignal-Sendeverstärkers (7a) und/oder des Funksignal-Empfangsverstärkers (7b) in das Antennenkabel (11) einzuspeisen,
wobei
a) der Funksignal-Sendeverstärker (7a) und/oder der Funksignal-Empfangsverstärker (7b) in das Antennenkabel (11) integriert ist/sind und dabei im Verlauf des Antennenkabels (11) näher an der Antennenanordnung (3) angeordnet ist/sind als die Fernspeisung (5) oder
b) der Funksignal-Sendeverstärker und/oder der Funksignal-Empfangsverstärker in die Antennenanordnung integriert ist/sind.

2. Anordnung nach dem vorhergehenden Anspruch, wobei der Funksignal-Sendeverstärker (7a) und der Funksignal-Empfangsverstärker (7b) Teile einer gemeinsamen Baugruppe (7) der Anordnung sind, wobei die gemeinsame Baugruppe (7) in das Antennenkabel (11) integriert ist und im Verlauf des Antennenkabels (11) näher an der Antennenanordnung (3) angeordnet ist als die Fernspeisung (5).

3. Anordnung nach einem der vorhergehenden Ansprüche, wobei die Fernspeisung (5) als ein Bauteil in das Antennenkabel (11) integriert ist.

4. Anordnung nach einem der vorhergehenden Ansprüche, wobei eine Sendesignal-Verstärkung des Funksignal-Sendeverstärkers (7a) derart auf die Sendesignaldämpfung des Antennenkabels (11) und optional auch auf die Sendesignaldämpfung einer ggf. zusätzlich vorhandenen Kopplungsantenne zur drahtlosen Ankopplung des Funk-Endgeräts (1) abgestimmt ist, dass der Sendeverstärker (7a) die Sendesignaldämpfung vollständig kompensiert.

5. Anordnung nach einem der vorhergehenden Ansprüche, wobei das Antennenkabel (11) ein Twinkabel ist, das zwei mechanisch miteinander verbundene Koaxialkabel (17, 19) aufweist, von denen eines als Sendesignalkabel (19) und das andere als Empfangssignalkabel (17) dient.

6. Verfahren zum Herstellen einer Anordnung zum Senden und Empfangen von Funksignalen, insbesondere Funksignalen in einem zellulären Funknetz wie UMTS, LTE und/oder GSM, wobei das Verfahren die Schritte aufweist:
• Bereitstellen eines Antennenkabel (11) mit einem Endgeräte-Anschluss (22, 24), über den ein Funk-Endgerät (1) an das Antennenkabel (11) anschließbar ist, um Funksignale von dem Funk-Endgerät (1) zu einer entfernten Station per Funk zu übertragen und von der entfernten Station per Funk zu empfangen,
• Verbinden einer Antennenanordnung (3), die zumindest eine Antenne (3a, 3b) aufweist, mit einem dem Endgeräte-Anschluss (22, 24) entgegengesetzten Ende des Antennenkabels (11), wobei die Antennenanordnung (3) ausgestaltet ist, die Funksignale zu senden bzw. zu empfangen,
• Anordnen eines Funksignal-Sendeverstärkers (7a) in einem Funksignal-Sendepfad zwischen dem Endgeräte-Anschluss (22, 24) und der Antennenanordnung (3),
• Anordnen eines Funksignal-Empfangsverstärkers (7b) in einem Funksignal-Empfangspfad zwischen der Antennenanordnung (3) und dem Endgeräte-Anschluss (22, 24),
• Anschließen einer Fernspeisung (5) an die Antennenanordnung (3), wobei die Fernspeisung (5) ausgestaltet ist, einen Gleichstrom zur Versorgung des Funksignal-Sendeverstärkers (7a) und/oder des Funksignal-Empfangsverstärkers (7b) in das Antennenkabel (11) einzuspeisen,
wobei
a) der Funksignal-Sendeverstärker (7a) und/oder der Funksignal-Empfangsverstärker (7b) in das Antennenkabel (11) integriert wird/werden und dabei im Verlauf des Antennenkabels (11) näher an der Antennenanordnung (3) angeordnet wird/werden als die Fernspeisung (5) oder
b) der Funksignal-Sendeverstärker und/oder der Funksignal-Empfangsverstärker in die Antennenanordnung integriert wird/werden.

7. Verfahren nach dem vorhergehenden Anspruch, wobei der Funksignal-Sendeverstärker (7a) und der Funksignal-Empfangsverstärker (7b) als Teile einer gemeinsamen Baugruppe der Anordnung in das Antennenkabel (11) integriert werden und die Baugruppe im Verlauf des Antennenkabels (11) näher an der Antennenanordnung (3) angeordnet wird als die Fernspeisung (5).

8. Verfahren nach einem der vorhergehenden Ansprüche, wobei die Fernspeisung (5) als ein Bauteil in das Antennenkabel (11) integriert wird.

9. Verfahren nach einem der vorhergehenden Ansprüche, wobei eine Sendesignal-Verstärkung des Funksignal-Sendeverstärkers (7a) derart auf die Sendesignaldämpfung des Antennenkabels (11) und optional auch auf die Sendesignaldämpfung einer ggf. zusätzlich vorhandenen Kopplungsantenne zur drahtlosen Ankopplung des Funk-Endgeräts (1) abgestimmt wird, dass der Sendeverstärker (7a) die Sendesignaldämpfung vollständig kompensiert.

10. Verfahren nach einem der vorhergehenden Ansprüche, wobei das Antennenkabel ein Twinkabel ist, das zwei mechanisch miteinander verbundene Koaxialkabel aufweist, von denen eines als Sendesignalkabel (19) und das andere als Empfangssignalkabel (17) dient.
